# EUROPÄISCHE PATENTANMELDUNG

(11) **EP 0 940 900 A1**
(43) Veröffentlichungstag der Anmeldung: **08.09.1999**
(21) Anmeldenummer: 99400295.4
(22) Anmeldetag: 08.02.1999
(51) Int. Cl.: H02G 15/18

(54) **Kabelmuffe mit einer den Spleiss umhüllenden Einlage**

(30) Priorität: 04.03.1998 DE 29803701 U
(71) Anmelder: ALCATEL, 75008 Paris (FR)
(72) Erfinder: Brylak-Niemann, Sabine Dr., 48143 Münster (DE); Müller, Uwe, 32469 Petershagen (DE)
(74) Vertreter: Döring, Roger, Dipl.-Ing.

(57) **Zusammenfassung**

Bei einer Kabelmuffe mit einer den Spleiß umhüllenden Einlage, über die und die einmündenden Kabelenden ein Schrumpfschlauch bzw. eine Schrumpfmanschette schrumpfbar ist, besteht die Einlage aus einer um den Spleiß herumgewickelten Lage (3) aus Karton oder Kunststoff und der Schrumpfschlauch bzw. die Manschette (6) weist an ihrer der Einlage (3) zugewandten Oberfläche eine Metallfolie (7) auf.

## Beschreibung

Die Erfindung betrifft eine Kabelmuffe nach dem Oberbegriff des Anspruchs 1.

Aus dem US-Patent 4,142,592 ist eine Kabelmuffe mit einer Einlage und einer um die Einlage geschrumpften Hülle bekannt, bei welcher die Einlage aus einem längsgeschlitzten rohrförmigen Element besteht, welches an seinen Enden spitz zulaufende Zungen aufweist, welche auf die jeweiligen Kabelmäntel heruntergeformt sind und somit einen allmählichen Übergang zwischen dem Spleiß und den Kabelmänteln schaffen. Als Material für die Einlage wird hier vernetztes Polyethylen vorgeschlagen.

Aus der DE 28 07 154 B2 ist eine Kabelmuffe mit einer den Spleiß umhüllenden Einlage sowie einer geschrumpften Hülle bekannt, bei welcher die Einlage aus Karton mit einer innerhalb desselben angeordneten Aluminiumfolie gebildet ist.

Weiterhin ist aus der EP 0 025 691 B1 eine Einlage für Kabelmuffen mit einer wärmegeschrumpften Hülle bekannt, welche aus einer laminaren Struktur aus einer Schicht aus Faserbahnmaterial (Preßspan) zwischen einer Metallschicht und einer mit Mikrolöchern versehenen Schicht aus Polymerfilmmaterial besteht. Zwischen der Metallfolie und der Preßspanschicht ist noch eine Polyesterschicht vorgesehen. Darüber hinaus ist die außengelegene Aluminiumschicht noch mit einer Polyethylenschicht versehen.

Die erstgenannten Lösungen konnten sich auf dem Markt nicht durchsetzen, wogegen die letztgenannte Einlage fast ausnahmslos für die sogenannten nicht druckdichten Kabelmuffen zum Einsatz gekommen ist.

Nachteilig bei dieser Einlage ist wegen des laminaren Aufbaus der hohe Preis. Ein weiterer wesentlicher Nachteil besteht darin, daß im Falle eines Wiederöffnens der Muffe nicht nur das Material der wärmegeschrumpften Hülle sondern auch die Einlage kostenträchtig entsorgt werden muß.

Der vorliegenden Erfindung liegt von daher die Aufgabe zugrunde, eine Einlage für eine Kabelmuffe der eingangs erwähnten Art bereitzustellen, die wesentlich kostengünstiger ist als die bekannte Einlage und die wesentlich einfacher entsorgt werden kann. Darüberhinaus soll die Kabelmuffe permeationsdicht sein, um einen Eintritt von Feuchtigkeit in die Muffe zu verhindern.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

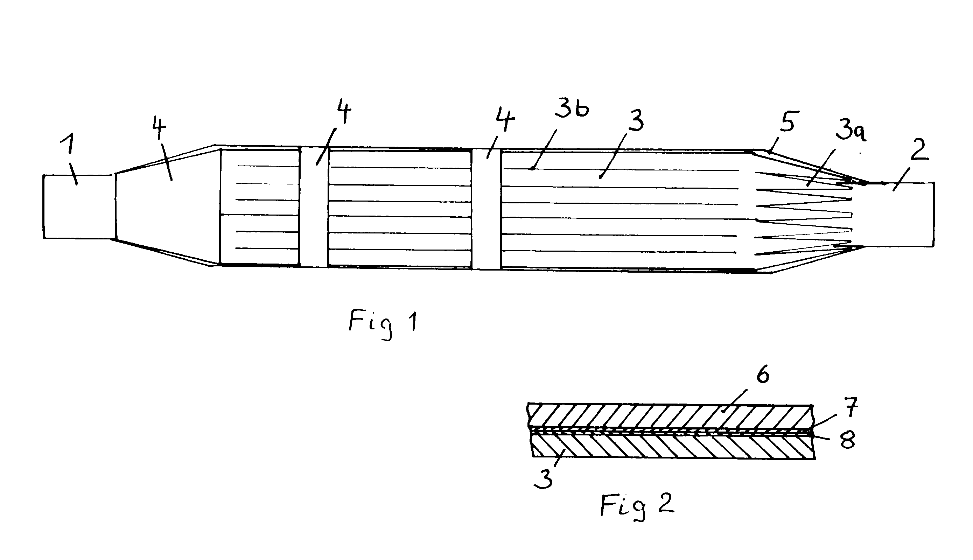

Die Erfindung ist anhand des in den Figuren 1 und 2 schematisch dargestellten Ausführungsbeispiels näher erläutert.

In Figur 1 ist eine seitliche Ansicht einer Kabelverbindung zwischen zwei Kabeln 1 und 2 dargestellt. Bei den Kabeln handelt es sich vorzugsweise um Nachrichtenkabel, deren Adern in einem Spleiß miteinander verbunden werden. Da der Spleiß in der Regel einen wesentlich größeren Durchmesser aufweist als die Kabel 1 und 2, ist es erforderlich, daß ein allmählicher Übergang von dem großen Spleißdurchmesser zum kleineren Kabeldurchmesser geschaffen wird, damit die die Kabelverbindung feuchtigkeitsdicht umhüllende wärmegeschrumpfte Hülle keine großen Durchmessersprünge überwinden muß.

Dieser allmähliche Übergang wird durch eine Lage 3 geschaffen, die aus einem um die Spleißverbindung herumgerollten Band aus Preßpappe oder vernetztem Polyethylen besteht. Das Band 3 weist an seinen beiden Enden spitz zulaufende Zungen 3a auf, die auf den Mantel der Kabel 1 und 2 heruntergeformt werden. Um das Herumrollen des Bandes 3 um die Spleißverbindung zu vereinfachen, sind in Längsrichtung des Bandes 3 verlaufende Längsfalzungen oder Längswellungen 3b vorgesehen. Diese Falzungen oder Wellungen 3b sind darüber hinaus zur Erhöhung der Längsstabilität vorgesehen. Nach dem Herumrollen des Bandes 3 um die Spleißstelle wird der Zustand durch Klebebänder 4 fixiert.

Um diese Anordnung wird dann - wie an sich bekannt - in nicht dargestellter Weise eine wärmeschrumpfbare Manschette herumgelegt, an ihren Längskanten mit einer Schiene verschlossen und anschließend durch Einwirkung einer weichen Flamme zum Schrumpfen gebracht. Dabei paßt sich die wärmeschrumpfende Manschette der Kontur der Einlage an.

Um die Verbindungsstelle permeationsdicht zu machen, ist die wärmeschrumpfbare Manschette an ihrer nach innen weisenden Oberfläche mit einer Aluminiumfolie beschichtet.

Die Figur 2 zeigt einen Schnitt durch einen Teil der Wandung der Kabelmuffe.

Mit 3 ist das Band aus Preßpappe bzw. vernetztem Polyethylen bezeichnet, welches als erstes um den Spleiß herumgeformt wird, wie anhand der Figur beschrieben. Sodann wird die wärmeschrumpfbare Manschette 6 um das Band 3 herumgelegt und an ihren Längskanten wie an sich bekannt mit einer nicht dargestellten Schiene, die über Randverdickungen geschoben wird, geschlossen. Die Manschette 6 weist an ihrer nach innen weisenden Oberfläche eine Aluminiumfolie 7 auf. Die Aluminiumfolie 7 kann noch mit einer Heißschmelzkleberschicht 8 versehen sein.

Nach der Installation der Manschette 6 wird mit einer Flamme die Manschette 6 erwärmt. Die Manschette 6 schrumpft dabei auf die Lage 3 sowie die Mäntel der Kabel 1 und 2 herunter. Bei der Schrumpfung wird der Heißschmelzkleber flüssig und wird durch die Schrumpfkräfte in etwaige Hohlräume gepreßt.

Die Wanddicke des Bandes 3 beträgt für den Fall der Preßpappe 0,3 - 2,5 mm. Die Aluminiumfolie weist eine Wanddicke von 0,007 bis 0,5 mm auf.

Die Kabelmuffe nach der Lehre der Erfindung ist äußerst kostengünstig herstellbar. Darüberhinaus ist sie permeationsdicht, sodaß keine Feuchtigkeit von außen in die Kabelmuffe eindringen kann.

Durch die Erfindung werden die Kosten der Einlage um ca. 80% gegenüber der Einlage mit laminarem Aufbau gesenkt. Eine Diffusionssperrschicht der Einlage ist nicht notwendig, da die wärmeschrumpfende Manschette bereits eine Diffusionssperrschicht enthält.

## Patentansprüche

1. Kabelmuffe mit einer den Spleiß umhüllenden Einlage, über die und die einmündenden Kabelenden ein Schrumpfschlauch bzw. eine Schrumpfmanschette schrumpfbar ist, wobei die Einlage formbeständig und wärmedämmend ist, dadurch gekennzeichnet, daß die Einlage aus einer um den Spleiß herumgewickelten Lage (3) aus Karton oder Kunststoff besteht und der Schrumpfschlauch bzw. die Manschette (6) an ihrer der Einlage (3) zugewandten Oberfläche eine Metallfolie (7) aufweist.

2. Kabelmuffe nach Anspruch 1, dadurch gekennzeichnet, daß die Einlage (3) an ihren Seitenrändern geschlitzt sind.

3. Kabelmuffe nach Anspruch 2, dadurch gekennzeichnet, daß die Schlitze im wesentlichen dreieckförmig sind, so daß sich spitz zulaufende Zungen (3a) ergeben.

4. Kabelmuffe nach einem der Ansprüche 1 bis 3, dadurch gekennzeichnet, daß die Wanddicke der Einlage (3) zwischen 0,5 und 2,5 mm beträgt.

5. Kabelmuffe nach einem der Ansprüche 1 bis 4, dadurch gekennzeichnet, daß die Einlage (3) aus Preßpappe besteht.

6. Kabelmuffe nach einem der Ansprüche 1 bis 5, dadurch gekennzeichnet, daß die Einlage (3) mit mehreren Klebebändern (4) um den Spleiß herum festgelegt ist.

7. Kabelmuffe nach einem der Ansprüche 1 bis 6, dadurch gekennzeichnet, daß die Wanddicke der Metallfolie (7) zwischen 0.007 und 0,5 mm beträgt.

8. Kabelmuffe nach einem der Ansprüche 1 bis 7, dadurch gekennzeichnet, daß die Metallfolie (7) eine Aluminiumfolie ist.

9. Kabelmuffe nach einem der Ansprüche 1 bis 8, dadurch gekennzeichnet, daß auf der dem Schrumpfschlauch bzw. der Schrumpfmanschette (6) abgekehrten Oberfläche der Metallfolie (7) eine Schicht (8) aus Heißschmelzkleber befindlich ist.
